# EUROPEAN PATENT APPLICATION

(11) **EP 3 521 763 A2**
(43) Date of publication of application: **07.08.2019**
(21) Application number: 19150801.9
(22) Date of filing: 08.01.2019
(51) Int. Cl.: G01C 21/36, G01C 21/34

(54) **METHOD AND SYSTEM FOR ASSISTING A DRIVER OF A VEHICLE IN FINDING A FACILITY PROVIDING A SERVICE REQUIRED BY THE VEHICLE**

(30) Priority: 31.01.2018 TW 10703382
(71) Applicant: Kwang Yang Motor Co., Ltd., Kaohsiung City 80794 (TW)
(72) Inventor: LIN, Chen-Sheng, 80794 Kaohsuing (TW); TSAI, Yi-Yang, 80794 Kaohsiung (TW); HSIEH, Wen-Chih, 11501 Taipei City (TW)
(74) Representative: Burton, Nick

(57) **Abstract**

A method for assisting a driver of a vehicle (1) in finding a facility providing a service required by the vehicle (1) is proposed. The vehicle (1) includes an instrument cluster device (5) communicatively coupled to a portable device (6) having a navigation function. When an energy level of the vehicle (1) is low, the instrument cluster device (5) triggers the portable device (6) to compute data for a navigation screen (500, 506) that indicates an energy resource supplement facility in a vicinity of the portable device (6), and to transmit the data to the instrument cluster device (5), so that the instrument cluster device (5) displays the navigation screen (500, 506).

## Description

The disclosure relates to a method and a system associated with a vehicle using navigation function of a portable device to assist a driver of the vehicle in finding a facility providing a service required by the vehicle.

A typical vehicle (such as cars, motorcycles, etc.) has a fuel gauge in the instrument cluster thereof to inform the driver of the amount of fuel remaining in the fuel tank, based on which the driver can determine whether fuel filling is needed. If the driver fails to pay attention to the fuel gauge, the vehicle may run out of gas in the middle of the road. Such condition may trouble the driver, especially in a case that the place where the vehicle stops is out-of-the-way or the nearest gas station is very far away.

Even if the driver has paid attention to the fuel gauge and is aware of the need for fuel filling, he or she may spend a considerable amount of time looking for a gas station when in an unfamiliar place. In a worst condition, the driver may fail to find a gas station before the gas runs out.

Taiwanese Patent No. M460002 discloses a system of notifying the driver of the need to fill the fuel for the vehicle. The system includes a fuel tank, a fuel level detector, a GPS device in the form of a portable device such as a smartphone, and a dashboard that has a fuel gauge. The fuel level detector acquires fuel level information relating to an amount of fuel remaining in the fuel tank directly from the fuel tank or from the fuel gauge, and provides the fuel level information to the portable device. The GPS device generates a notification in the form of images and/or audio signals when the fuel level information indicates that the amount of fuel remaining in the fuel tank is lower than a predetermined fuel level. Further, the GPS device may provide information of nearby gas stations, so as to navigate the driver to a gas station.

Since Taiwanese Patent No. M460002 requires use of the GPS device to provide navigation information and the notification, a holder may be needed to mount the portable device to the vehicle. In addition, the user may need to remove the portable device from the holder to avoid theft when leaving the vehicle, which is somewhat inconvenient.

Therefore, an object of the disclosure is to provide a method that can alleviate at least one of the drawbacks of the prior art.

According to the disclosure, a method for assisting a driver of a vehicle in finding a facility providing a service required by the vehicle is proposed. The vehicle includes an energy storage configured to store energy resource that is used to power the vehicle, an energy level sensor to detect an energy level relating to remaining energy resource in the energy storage, and an instrument cluster device that is electrically coupled to the energy level sensor and that is communicatively coupled to a portable device having a computation ability and a navigation function. The method includes: (a) by the instrument cluster device, receiving, from the energy level sensor, an energy level signal indicating the energy level detected by the energy level detector; (b) by the instrument cluster device, determining whether the energy level indicated by the energy level signal is lower than a predetermined energy level; (c) by the instrument cluster device upon determining in step (b) that the energy level indicated by the energy level signal is lower than the predetermined energy level, triggering the portable device to compute data for a navigation screen that indicates an energy resource supplement facility in a vicinity of the portable device, and to transmit the data for the navigation screen to the instrument cluster device; and (d) by the instrument cluster device, displaying the navigation screen based on the data for the navigation screen.

Another object of the disclosure is to provide a system that can alleviate at least one of the drawbacks of the prior art.

According to the disclosure, a system for assisting a driver of a vehicle in finding a facility providing a service required by the vehicle is proposed. The vehicle includes an energy storage configured to store energy resource that is used to power the vehicle. The system includes an energy level sensor and an instrument cluster device. The energy level sensor is configured to detect an energy level relating to remaining energy resource in the energy storage, and to output an energy level signal indicating the energy level detected thereby. The instrument cluster device is electrically coupled to the energy level sensor for receiving the energy level therefrom, is communicatively coupled to a portable device having a computation ability and a navigation function, includes a host display, and is configured to: i) determine whether the energy level indicated by the energy level signal is lower than a predetermined energy level, ii) upon determining that the energy level indicated by the energy level signal is lower than the predetermined energy level, trigger the portable device to compute data for a navigation screen that indicates an energy resource supplement facility in a vicinity of the portable device, and to transmit the data for the navigation screen to the instrument cluster device, and iii) display, using the host display, the navigation screen based on the data for the navigation screen.

Other features and advantages of the disclosure will become apparent in the following detailed description of the embodiment (s) with reference to the accompanying drawings, of which:
FIG. 1 is a block diagram illustrating a first system to implement an embodiment of a method for assisting a driver of a vehicle in finding a facility providing a service required by the vehicle according to the disclosure, where the vehicle is a gasoline vehicle or a diesel vehicle;
FIG. 2 is a schematic diagram illustrating a host display and a dashboard of an instrument cluster device of the system;
FIG. 3 is a flow chart illustrating steps of the embodiment for the first system;
FIG. 4 is a schematic diagram illustrating an exemplary gas-station navigation screen provided by the embodiment;
FIG. 5 is a flow chart illustrating additional steps of the embodiment;
FIG. 6 is a schematic diagram illustrating an exemplary maintenance-station navigation screen provided by the additional steps of the embodiment;
FIG. 7 is a block diagram illustrating a second system to implement an embodiment, where the vehicle is an electric vehicle;
FIG. 8 is a flow chart illustrating steps of the embodiment for the second system;
FIG. 9 is a schematic diagram illustrating an exemplary charging-station navigation screen provided by the embodiment;
FIG. 10 is a block diagram illustrating a variation of the vehicle of the first system;
FIG. 11 is a block diagram illustrating another variation of the vehicle of the first system;
FIG. 12 is a block diagram illustrating a variation of the vehicle of the second system; and
FIG. 13 is a block diagram illustrating another variation of the vehicle of the second system.

Before the disclosure is described in greater detail, it should be noted that where considered appropriate, reference numerals or terminal portions of reference numerals have been repeated among the figures to indicate corresponding or analogous elements, which may optionally have similar characteristics.

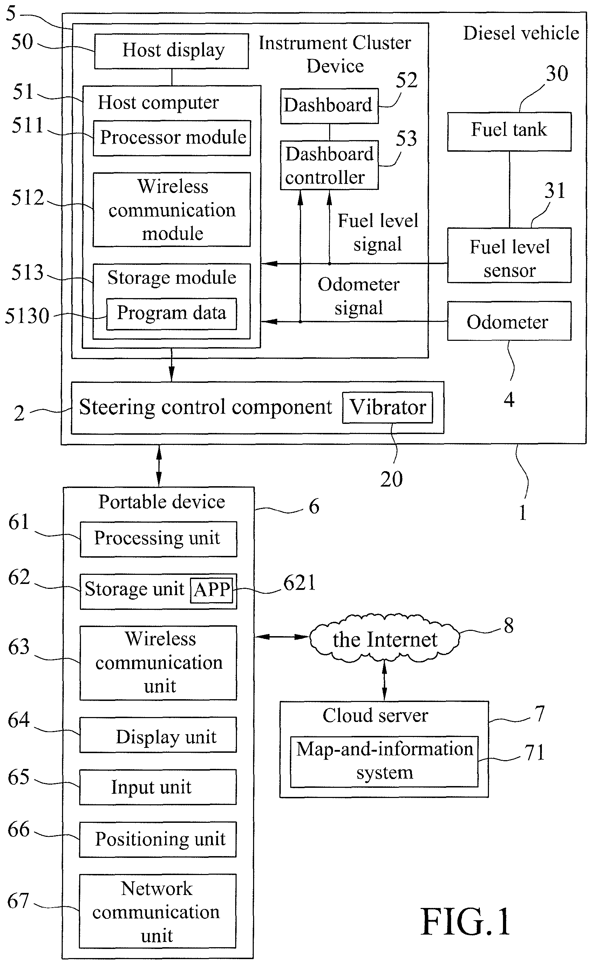

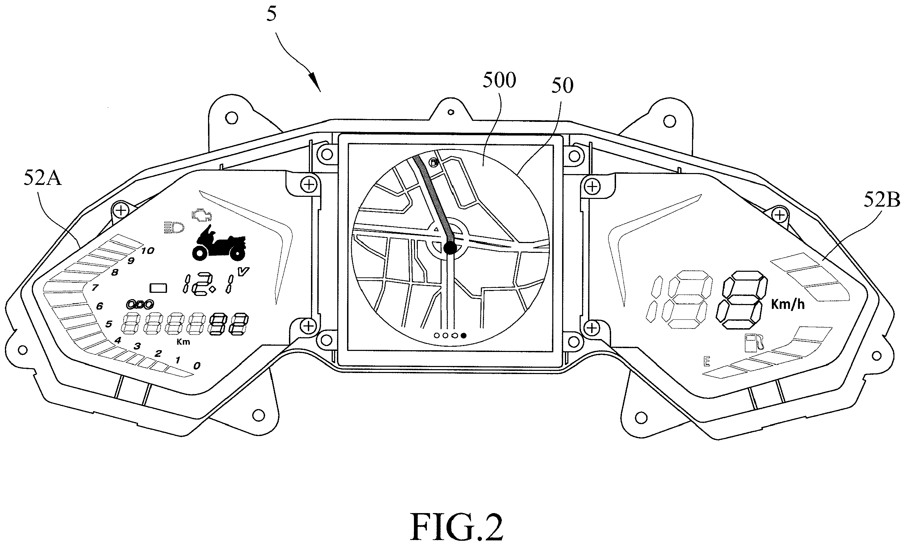

Referring to FIGS. 1 and 2, the embodiment of the method for assisting a driver of a vehicle 1 in finding a facility that provides a service required by the vehicle 1 is implemented by the vehicle 1, a portable device 6 and a map-and-information system 71. In this embodiment, the map-and-information system 71 is included in a cloud server 7.

The portable device 6 may be, for example, a smartphone, a wearable device, a tablet computer, etc., which has a computation ability and a navigation function, and includes a processing unit 61 (e.g., a single-core or multi-core processor), a storage unit 62 (e.g., flash memory) for storing an application program (APP) 621 which is to be executed by the portable device 6 to perform the navigation method according to this disclosure, a wireless communication unit 63 (e.g., a Bluetooth module, a Wi-Fi module, a near field communication module), a display unit 64 (e.g., a liquid crystal display (LCD), an organic light-emitting diode display), an input unit 65 (e.g., a keyboard, a touch screen, a microphone), a positioning unit 66 (e.g., a GPS device), and a network communication unit 67 for connection via a network (e.g., the Internet 8) to the cloud server 7. The processing unit 61 is electrically connected to the storage unit 62, the wireless communication unit 63, the display unit 64, the input unit 65, the positioning unit 66, and the network communication unit 67. In one embodiment, the display unit 64 and the input unit 65 may be integrated together to form a touch display which can display images (such as an operation interface of the APP 621) and which can receive input by touch operation of the user.

The vehicle 1 may be, for example, a motorcycle, a car, an all terrain vehicle (ATV), a utility vehicle (UV), an electric vehicle, etc.

In this embodiment, the vehicle 1 includes an energy storage configured to store energy resource used to power the vehicle 1, and an energy level sensor. The energy level sensor is configured to detect an energy level relating to remaining energy resource in the energy storage, and to output an energy level signal that indicates the energy level detected thereby. In a case that the vehicle 1 uses gasoline or diesel as its power source, the energy storage may be a fuel tank with fuel (gasoline or diesel) stored therein, and the energy level sensor may be a fuel level sensor configured to detect a fuel level of the fuel in the fuel tank (e.g., amount of the fuel remaining in the fuel tank), and to output a fuel level signal (i.e., the energy level signal as mentioned above) indicating the fuel level detected thereby. In a case that the vehicle 1 is powered by electricity, the energy storage may be a rechargeable battery mounted in the vehicle 1, and the energy level sensor may be an electrical energy detector configured to detect residual electrical energy in the rechargeable battery by, for example, detecting a voltage provided by the rechargeable battery, and to output a residual electrical energy signal (i.e., the energy level signal as mentioned above) indicating the residual electrical energy detected thereby. One object of this embodiment is to assist the driver of the vehicle 1 in finding an energy resource supplement facility (e.g., a gas station, a charging station, etc.) that is nearby when the energy level detected by the energy level sensor is lower than a predetermined energy level (e.g., a predetermined fuel level for the fuel in the fuel tank, a predetermined level for the residual electrical energy of the rechargeable battery).

In FIG. 1, the vehicle 1 is exemplified as a gasoline vehicle or a diesel vehicle that includes a steering control component 2, a fuel tank 30, a fuel level sensor 31 disposed in the fuel tank 30, an odometer 4, and an instrument cluster device 5.

The instrument cluster device 5 includes a host display 50, a host computer 51 electrically coupled to the host display 50, a dashboard 52, and a dashboard controller 53 electrically coupled to the dashboard 52.

Further referring to FIG. 2, the dashboard 52 is configured to display specific information in a dedicated format, which is set by a manufacturer of the vehicle 1, and which is not arbitrarily alterable as desired by a user. The dashboard controller 53 is configured to control display of the dashboard 52. As an example, in FIG. 2, the dashboard 52 is divided into a first part 52A and a second part 52B that are respectively arranged at left and right sides of the host display 50, and is particularly configured to display instrument cluster information such as an accumulated traveling distance (also called total traveling distance) of the vehicle 1, a traveling distance of an individual trip, a current voltage of a battery, a current speed of the vehicle 1, a current fuel level, current tire pressures, etc., in predefined formats and arrangements. On the other hand, the host display 50 is configured as an ordinary display, such as a regular LCD, that is used to display an image based on any arbitrary image data provided by the host computer 51. For example, the host computer 51 may be operated to cause the host display 50 to display the instrument cluster information (e.g., the accumulated traveling distance of the vehicle 1, the traveling distance of an individual trip, the current voltage of the battery, the current speed of the vehicle 1, the current fuel level, the current tire pressures, etc.). The host computer 51 includes a processor module 511 (e.g., a single-core or multi-core processor), a wireless communication module 512 (e.g., a Bluetooth module, a Wi-Fi module, a near field communication module), and a storage module 513 (e.g., a hard disk drive, flash memory, etc.) for storing program data 5130, such as an operating system (OS), firmware (FW), and application programs of the host computer 51. The processor module 511 is electrically coupled to the host display 50, the wireless communication module 512, the storage module 513, the steering control component 2, the fuel level sensor 31, and the odometer 4. The host computer 51 is capable of pairing with and/or connected to the portable device 6 via the wireless communication module 512 thereof and the wireless communication unit 63 of the portable device 6, so that the host computer 51 can receive data from the portable device 6, and control the host display 50 to display images based on the data received from the portable device 6. For example, when the host computer 51 has been paired with and is now communicatively coupled to the portable device 6 via wireless communication, the host computer 51 may cause the host display 50 to display information like vehicle speed, current time, weather, intelligent compass, notifications, vehicle finding, etc., which may be received from the portable device 6. In other embodiments, the host computer 51 may be connected to the portable device 6 via wired connection (e.g., a USB cable), and this disclosure is not limited in this respect.

The steering control component 2 may be, for example, a handle for a motorcycle, a steering wheel for a four-wheel vehicle such as a car, which is configured for a driver to control a moving direction of the vehicle 1 by hand. In this embodiment, the steering control component 2 is mounted with a vibrator 20, which is electrically coupled to the processor module 511.

The fuel level sensor 31 is configured to detect a fuel level of fuel in the fuel tank 30, and to output a fuel level signal that indicates the fuel level detected thereby. In this embodiment, the fuel level sensor 31 is electrically coupled to both of the host computer 51 and the dashboard controller 53, and outputs the fuel level signal directly to both of the host computer 51 and the dashboard controller 53, so that both of the host display 50 and the dashboard 52 can display information of the fuel level detected by the fuel level detector 31.

The odometer 4 is electrically coupled to the host computer 51 and the dashboard controller 53, and is configured to measure a traveling distance of the vehicle 1, and to output an odometer signal that indicates an accumulated traveling distance of the vehicle 1 measured thereby to the host computer 51 and the dashboard controller 53. In this embodiment, the odometer 4 outputs the odometer signal directly to both of the host computer 51 and the dashboard controller 53, so that both of the host display 50 and the dashboard 52 can display information of the accumulated traveling distance.

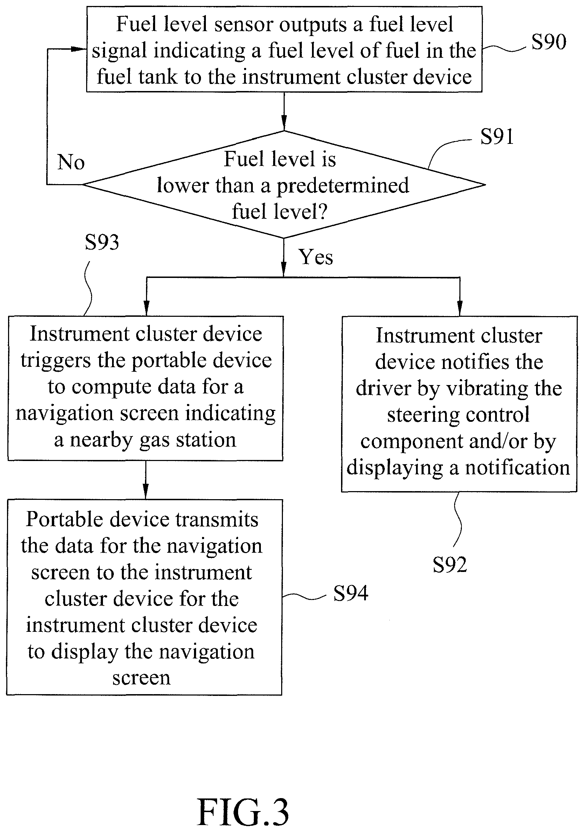

FIG. 3 shows a flow chart illustrating steps of the embodiment according to this disclosure in the case that the vehicle 1 is a gasoline vehicle or a diesel vehicle. Further referring to FIGS. 1 and 2, the embodiment is proposed to notify the driver of the need for fuel filling, and to compute and display information of a gas station or gas stations that are nearby when the vehicle 1 is running out of gas.

In step S90, the fuel level sensor 31 detects the fuel level of fuel in the fuel tank 30 and outputs the fuel level signal to the host computer 51 and the dashboard controller 53, so that the host computer 51 and the dashboard controller 53 respectively control the host display 50 and the dashboard 52 to display information of the fuel level, or only the dashboard controller 53 controls the dashboard 52 to display information of the fuel level.

In step S91, the processor module 511 determines whether the fuel level indicated by the fuel level signal is lower than a predetermined fuel level. In this embodiment, the predetermined fuel level may be set to, for example, 0.5 liters, but this disclosure is not limited in this respect. The flow goes to steps S92 and S93 when the determination is affirmative, and goes back to step S90 when otherwise.

In step S92, the processor module 511 triggers vibration of the vibrator 20, so as to vibrate the steering control component 2 which is operated by the hand(s) of the driver, notifying the driver of the need for fuel filling. In addition, the processor module 511 may also cause the host display 50 to display a notification indicating that the fuel level is low (e.g., displaying a text message of "The fuel is running out, please fill the fuel tank"), so as to notify the driver of the need for fuel filling.

In step S93, the processor module 511 triggers the portable device 6 to compute data for a gas-station navigation screen that indicates a fuel station in a vicinity of the portable device 6 and to transmit the data for the gas-station navigation screen to the processor module 511. In this embodiment, the portable device 6 uses the network communication unit 67 to communicate with the cloud server 7 via the Internet 8 by wireless communication technology (such as 4G, the fourth generation of broadband cellular network technology), and computes the data for the gas-station navigation screen based on data (such as map data) from the map-and-information system 71 and real-time position information provided by the positioning unit 66 (e.g., GPS coordinates of a real-time position of the portable device 6). Furthermore, the gas-station navigation screen may indicate a route to the nearest gas station.

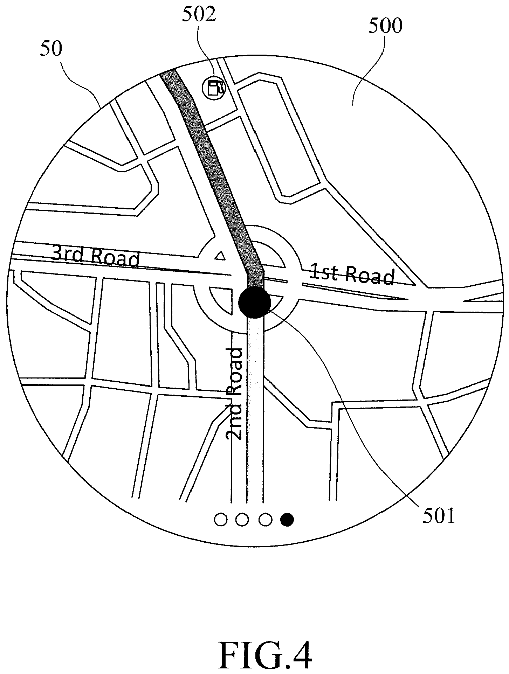

In step S94, the portable device 6 transmits the data for the gas-station navigation screen to the processor module 511, so that the processor module 511 controls the host display 50 to display the gas-station navigation screen based on the data for the gas-station navigation screen. FIG. 4 illustrates an exemplary gas-station navigation screen 500 showing a solid circular mark 501 that represents a real-time position of the portable device 6 (substantially the same as a real-time position of the vehicle 1 assuming that the portable device 6 travels with the vehicle 1) in a center of the gas-station navigation screen 500, and a gas station mark 502 that represents a location of a gas station in the vicinity of the vehicle 1. As a result, the embodiment not only notifies the driver of the need for fuel filling by vibrating the steering control component 2 and/or displaying notification on the host display 50, but also automatically displays the gas-station navigation screen 500 on the host display 50 to make the driver become aware of nearby gas station(s), so that the driver may drive the vehicle 1 to the gas station represented by the gas station mark 502 in the gas-station navigation screen 500 to fill the fuel tank 30.

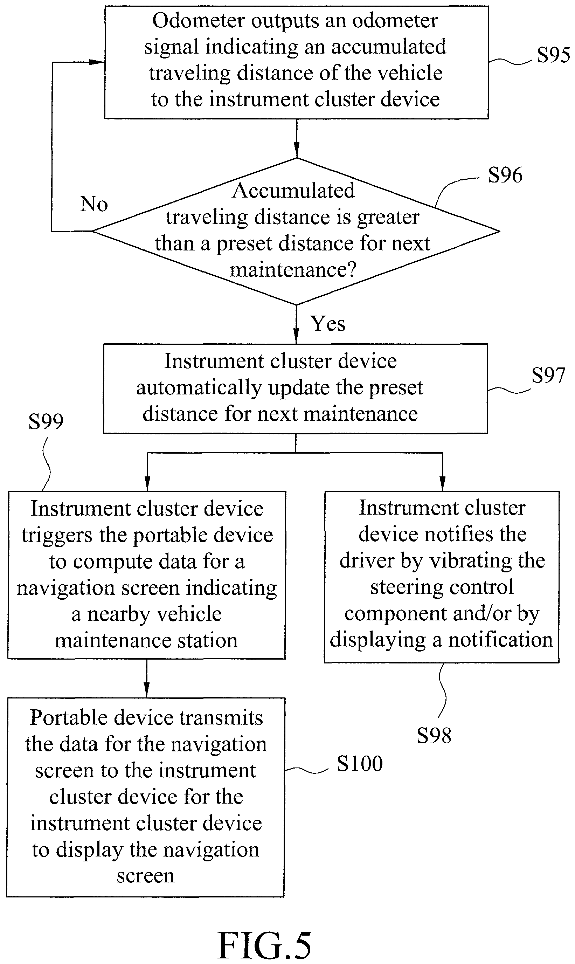

Referring to FIGS. 1 and 5, this embodiment may further notify the driver of the need for maintenance of the vehicle 1 based on the accumulated traveling distance of the vehicle 1, and display information of a vehicle maintenance station or vehicle maintenance stations that are nearby.

In step S95, the odometer 4 measures the accumulated traveling distance of the vehicle 1 and outputs the odometer signal to the host computer 51 and the dashboard controller 53, so that the host computer 51 and the dashboard controller 53 respectively control the host display 50 and the dashboard 52 to display information of the accumulated traveling distance, or only the dashboard controller 53 controls the dashboard 52 to display information of the accumulated traveling distance.

In step S96, the processor module 511 determines whether the accumulated traveling distance indicated by the odometer signal is greater than a preset distance for next maintenance. In this embodiment, the preset distance for next maintenance may be set to, for example, 1000 kilometers or its multiples when the vehicle 1 is a motorcycle, or 5000 kilometers of its multiples when the vehicle 1 is a car, but this disclosure is not limited in this respect. The flow goes to step S97 when the determination is affirmative, and goes back to step S95 when otherwise.

In step S97, the processor module 511 automatically updates the preset distance for next maintenance. In a case that the vehicle 1 is a motorcycle having the preset distance for next maintenance set to 6000 kilometers, the processor module 511 may update the preset distance for next maintenance to 7000 kilometers by adding 1000 kilometers to the original preset distance for next maintenance, which is 6000 kilometers. Then, the flow goes to steps S98 and S99.

In step S98, the processor module 511 triggers vibration of the vibrator 20, so as to vibrate the steering control component 2 which is operated by the hand(s) of the driver, notifying the driver of the need for maintenance. In addition, the processor module 511 may also cause the host display 50 to display a notification indicating the need for maintenance (e.g. displaying a text message of "Maintenance is required"), so as to notify the driver of the need for maintenance.

In step S99, the processor module 511 triggers the portable device 6 to compute data for a maintenance-station navigation screen that indicates a vehicle maintenance station in a vicinity of the portable device 6 and to transmit the data for the maintenance-station navigation screen to the processor module 511. In this embodiment, the portable device 6 uses the network communication unit 67 to communicate with the cloud server 7 via the Internet 8 by wireless communication technology (such as 4G, the fourth generation of broadband cellular network technology), and computes the data for the maintenance-station navigation screen based on data (such as map data) from the map-and-information system 71 and the real-time position information provided by the positioning unit 66. Furthermore, the maintenance-station navigation screen may indicate a route to the nearest maintenance station.

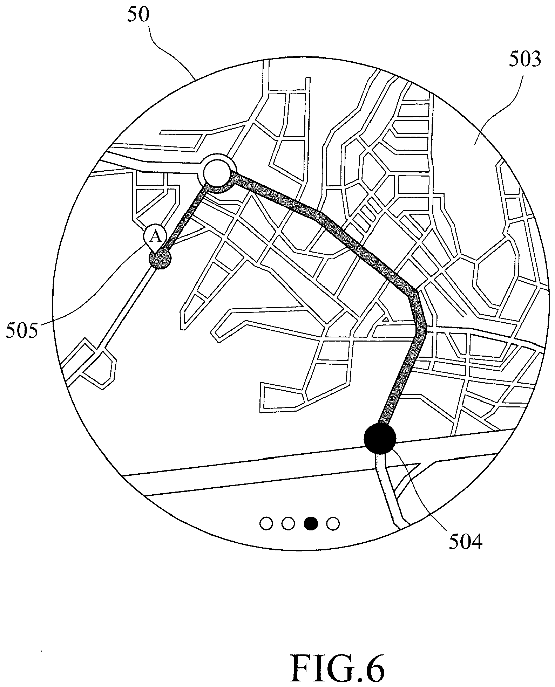

In step S100, the portable device 6 transmits the data for the maintenance-station navigation screen to the processor module 511, so that the processor module 511 controls the host display 50 to display the maintenance-station navigation screen based on the data for the maintenance-station navigation screen. FIG. 6 illustrates an exemplary maintenance-station navigation screen 503 showing a solid circular mark 504 that represents a real-time position of the portable device 6 (substantially the same as a real-time position of the vehicle 1 assuming that the portable device 6 travels with the vehicle 1), and a location mark 505 that represents a location of a vehicle maintenance station in the vicinity of the vehicle 1. As a result, the embodiment not only notifies the driver of the need for maintenance by vibrating the steering control component 2 and/or displaying notification on the host display 50, but also automatically displays the maintenance-station navigation screen 503 on the host display 50 to make the driver become aware of nearby vehicle maintenance station (s), so that the driver may drive the vehicle 1 to the vehicle maintenance station represented by the location mark 505 in the maintenance-station navigation screen 500 for vehicle maintenance.

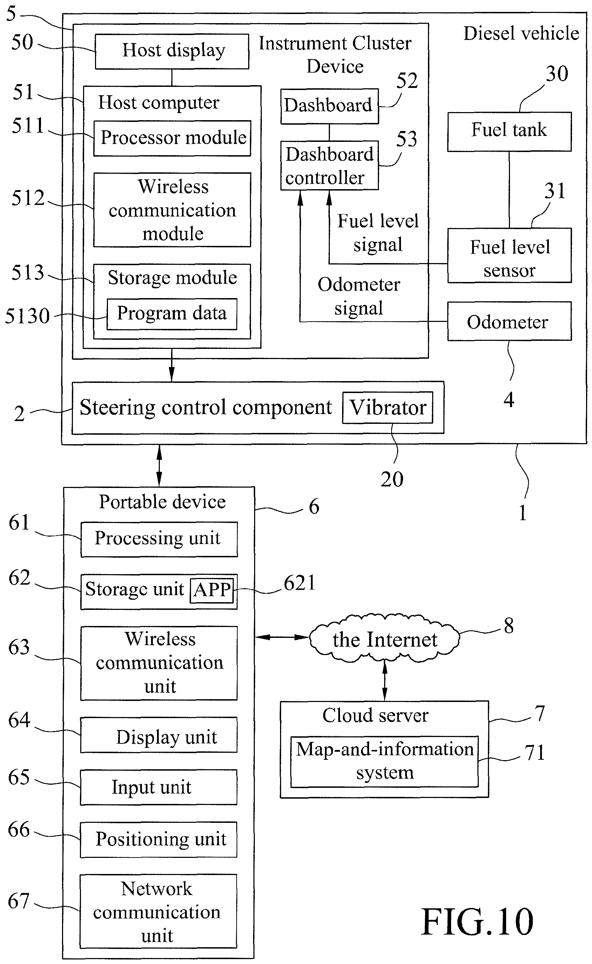

Referring to FIG. 10, in a variation of this implementation where the vehicle 1 is a gasoline vehicle or a diesel vehicle, the host computer 51 is electrically coupled to the dashboard controller 53, and each of the fuel level sensor 31 and the odometer 4 is electrically coupled only to the dashboard controller 53. The fuel level sensor 31 transmits the fuel level signal only to the dashboard controller 53, and the dashboard controller 53 then transmits the fuel level signal received thereby to the host computer 51. Similarly, the odometer 4 transmits the odometer signal only to the dashboard controller 53, and the dashboard controller 53 then transmits the odometer signal received thereby to the host computer 51.

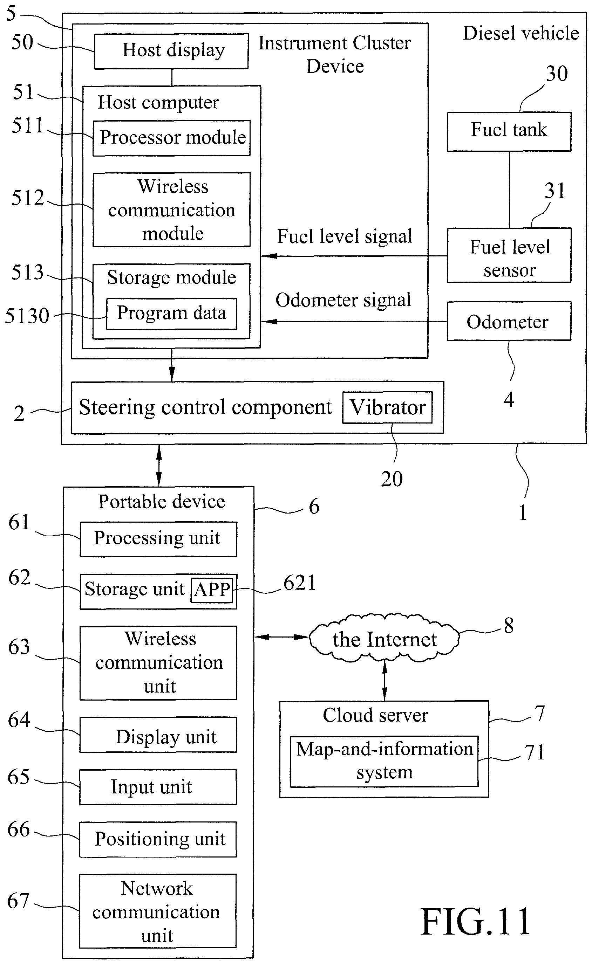

Referring to FIG. 11, in another variation of this implementation, the instrument cluster device 5 includes only the host computer 51 and the host display 50, while the dashboard controller 53 and the dashboard 52 (see FIG. 1) are omitted. Each of the fuel level sensor 31 and the odometer 4 is electrically coupled only to the host computer 51.

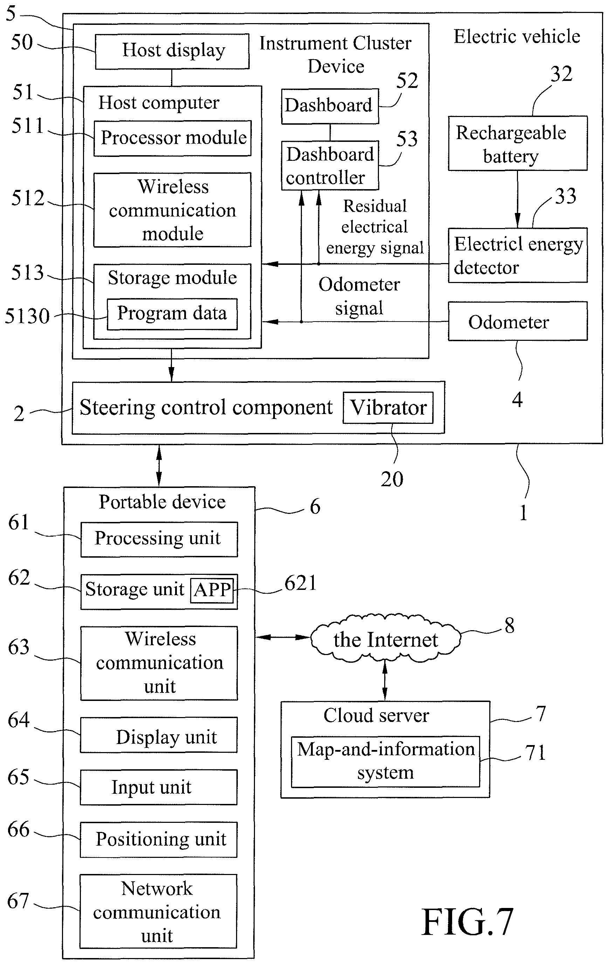

Referring to FIG. 7, the vehicle 1 that cooperates with the portable device 6 and the map-and-information system 71 to implement the embodiment according to this disclosure is exemplified as an electric vehicle that includes, in addition to the steering control component 2, the odometer 4 and the instrument cluster device 5 that are mentioned hereinbefore, a rechargeable battery 32 and an electrical energy detector 33 that replace the fuel tank 30 and fuel level sensor 31 in FIG. 1.

The electrical energy detector 33 is electrically coupled to the rechargeable battery 32, and is configured to detect residual electrical energy of the rechargeable battery 32 and to output a residual electrical energy signal that indicates the residual electrical energy detected thereby. In this embodiment, the electrical energy detector 31 is electrically coupled to both of the host computer 51 and the dashboard controller 53, and outputs the residual electrical energy signal directly to both of the host computer 51 and the dashboard controller 53, so that both of the host display 50 and the dashboard 52 can display information of the residual electrical energy detected by the electrical energy detector 33.

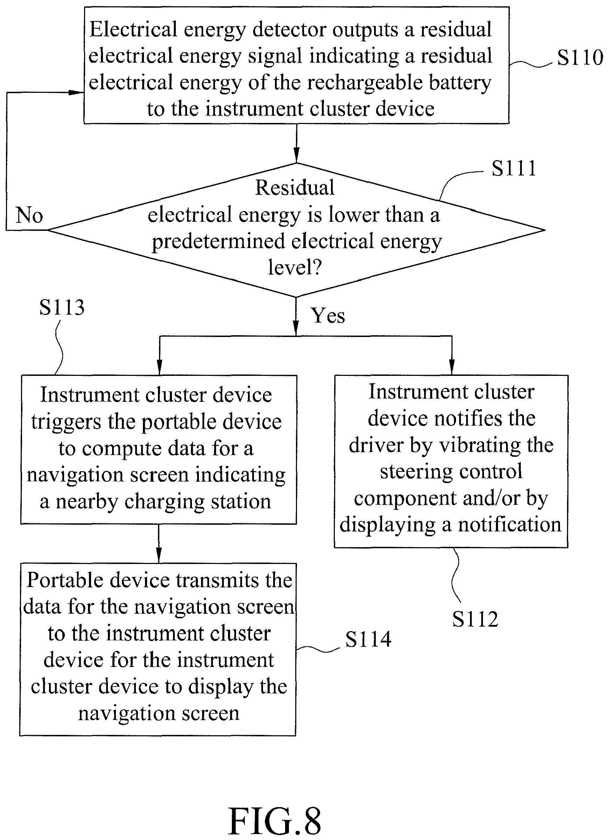

FIG. 8 shows a flow chart illustrating steps of the embodiment according to this disclosure in the case that the vehicle 1 is an electric vehicle. Further referring to FIG. 7, the embodiment is proposed to notify the driver of a need for charging, and to compute and display information of a charging station or charging stations that are nearby when the rechargeable battery 32 is running out of electrical energy.

In step S110, the electrical energy detector 33 detects the residual electrical energy of the rechargeable battery 32 and outputs the residual electrical energy signal to the host computer 51 and the dashboard controller 53, so that the host computer 51 and the dashboard controller 53 respectively control the host display 50 and the dashboard 52 to display information of the residual electrical energy, or only the dashboard controller 53 controls the dashboard 52 to display information of the residual electrical energy.

In step S111, the processor module 511 determines whether the residual electrical energy indicated by the residual electrical energy signal is lower than a predetermined electrical energy level. The flow goes to steps S112 and S113 when the determination is affirmative, and goes back to step S110 when otherwise.

In step S112, the processor module 511 triggers vibration of the vibrator 20, so as to vibrate the steering control component 2 which is operated by the hand(s) of the driver, notifying the driver of the need for charging. In addition, the processor module 511 may also cause the host display 50 to display a notification indicating that the residual electrical energy is low (e.g., displaying a text message of "The battery is running out of electrical energy, please charge the battery"), so as to notify the driver of the need for charging.

In step S113, the processor module 511 triggers the portable device 6 to compute data for a charging-station navigation screen that indicates a charging station in a vicinity of the portable device 6 and to transmit the data for the charging-station navigation screen to the processor module 511. In this embodiment, the portable device 6 uses the network communication unit 67 to communicate with the cloud server 7 via the Internet 8 by wireless communication technology (such as 4G, the fourth generation of broadband cellular network technology), and computes the data for the charging-station navigation screen based on data (such as map data) from the map-and-information system 71 and real-time position information provided by the positioning unit 66. Furthermore, the charging-station navigation screen may indicate a route to the nearest charging station.

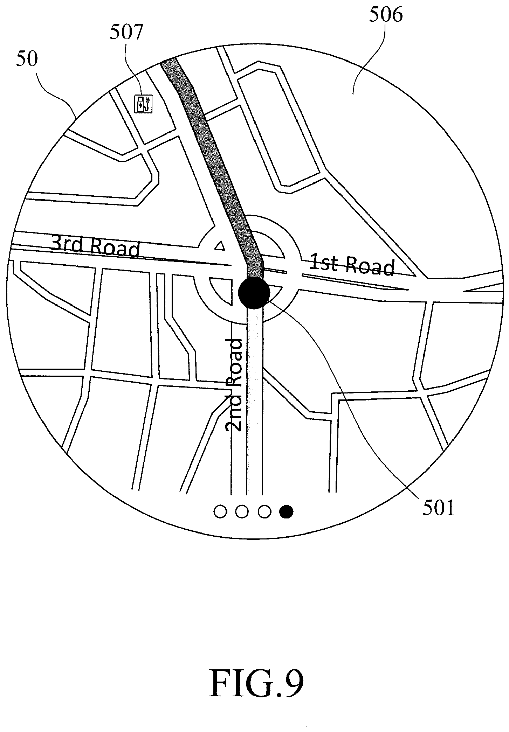

In step S114, the portable device 6 transmits the data for the charging-station navigation screen to the processor module 511, so that the processor module 511 controls the host display 50 to display the charging-station navigation screen based on the data for the charging-station navigation screen. FIG. 9 illustrates an exemplary charging-station navigation screen 506 showing a solid circular mark 501 that represents a real-time position of the portable device 6 (substantially the same as a real-time position of the vehicle 1 assuming that the portable device 6 travels with the vehicle 1) in a center of the charging-station navigation screen 506, and a charging station mark 507 that represents a location of a charging station in the vicinity of the vehicle 1. As a result, the embodiment not only notifies the driver of the need for charging by vibrating the steering control component 2 and/or displaying notification on the host display 50, but also automatically displays the charging-station navigation screen 506 on the host display 50 to make the driver become aware of nearby charging station(s), so that the driver may drive the vehicle 1 to the charging station represented by the charging station mark 507 in the charging-station navigation screen 506 to charge the rechargeable battery 32.

The abovementioned steps S110-114 may also cooperate with steps S95-S100 as described hereinbefore and shown in FIG. 5 to further notify the driver of the need for maintenance of the vehicle 1 based on the accumulated traveling distance of the vehicle 1, and display information of a vehicle maintenance station or vehicle maintenance stations that are nearby.

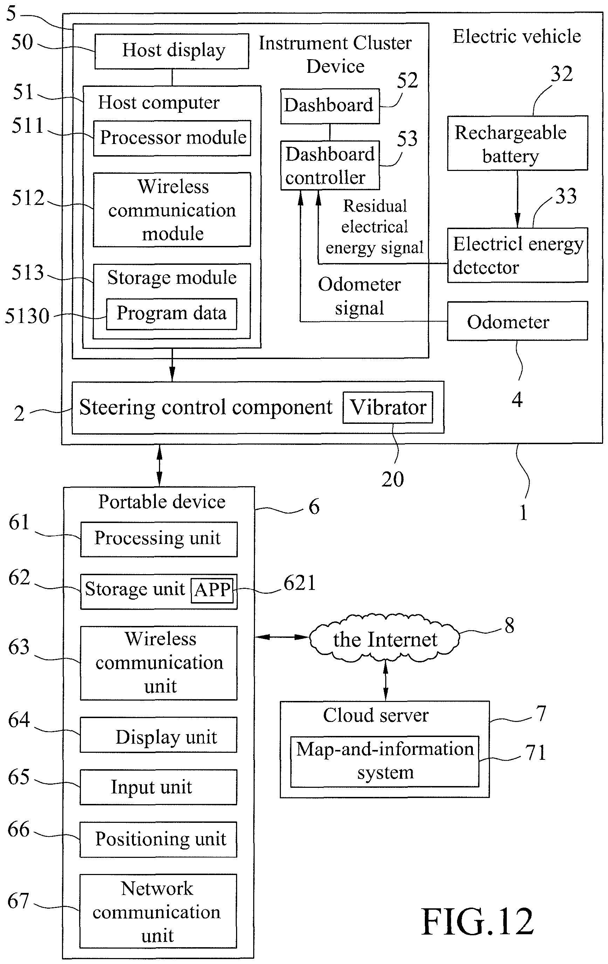

Referring to FIG. 12, in a variation of this implementation where the vehicle 1 is an electric vehicle, the host computer 51 is electrically coupled to the dashboard controller 53, and each of the electrical energy detector 33 and the odometer 4 is electrically coupled only to the dashboard controller 53. The electrical energy detector 33 transmits the residual electrical energy signal only to the dashboard controller 53, and the dashboard controller 53 then transmits the residual electrical energy signal received thereby to the host computer 51. Similarly, the odometer 4 transmits the odometer signal only to the dashboard controller 53, and the dashboard controller 53 then transmits the odometer signal received thereby to the host computer 51.

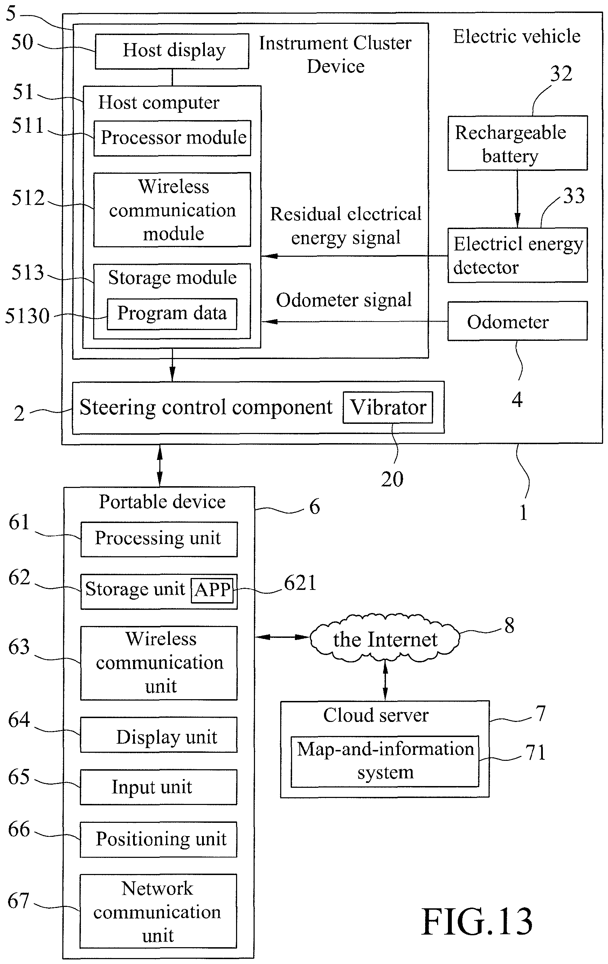

Referring to FIG. 13, in another variation of this implementation, the instrument cluster device 5 includes only the host computer 51 and the host display 50, while the dashboard controller 53 and the dashboard 52 (see FIG. 7) are omitted. Each of the electrical energy detector 33 and the odometer 4 is electrically coupled only to the host computer 51.

In summary, the embodiments of this disclosure use the instrument cluster device 5 to automatically notify the driver of the need of fuel filling or charging by vibrating the steering control component 2 or displaying notification on the host display 50 when the fuel level or residual electrical energy is low, so that the driver may not miss the timing of fuel filling or charging. In addition, the instrument cluster device 5 may automatically cooperate with the portable device 6 to display a navigation screen that indicates the gas station(s) or charging station(s) nearby, saving time in looking for a gas station or charging station and reducing the chance of the vehicle 1 running out of fuel or electricity. By virtue of using the portable device 6 to transmit the navigation screen to the instrument cluster device 5 for display on the host display 50, the driver does not need a holder for installing the portable device 6 to the vehicle 1, thereby saving cost for the user and avoiding inconvenience from mounting/dismounting the portable device 6 to/from the holder. Furthermore, since the navigation is performed using the portable device 6, it is not necessary for the vehicle 1 to be equipped with GPS functionality, reducing the production cost of the vehicle 1.

In the description above, for the purposes of explanation, numerous specific details have been set forth in order to provide a thorough understanding of the embodiment (s) . It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, in the practice of the disclosure.

## Claims

1. A method for assisting a driver of a vehicle (1) in finding a facility providing a service required by the vehicle (1), the vehicle (1) including an energy storage (30, 32) configured to store energy resource that is used to power the vehicle (1), an energy level sensor (31, 33) to detect an energy level relating to remaining energy resource in the energy storage (30, 32), and an instrument cluster device (5) that is electrically coupled to the energy level sensor (31, 33) and that is communicatively coupled to a portable device (6) having a computation ability and a navigation function, said method **characterized by**:
a) by the instrument cluster device (5), receiving, from the energy level sensor (31, 33), an energy level signal indicating the energy level detected by the energy level sensor (31, 33);
b) by the instrument cluster device (5), determining whether the energy level indicated by the energy level signal is lower than a predetermined energy level;
c) by the instrument cluster device (5) upon determining in step b) that the energy level indicated by the energy level signal is lower than the predetermined energy level, triggering the portable device (6) to compute data for a first navigation screen (500, 506) that indicates an energy resource supplement facility in a vicinity of the portable device (6), and to transmit the data for the first navigation screen (500, 506) to the instrument cluster device (5); and
d) by the instrument cluster device (5), displaying the first navigation screen (500, 506) based on the data for the first navigation screen (500, 506).

2. The method of Claim 1, **characterized in that** the portable device (6) is communicatively coupled to a cloud server (7), and computes the data for the first navigation screen (500, 506) based on a map-and-information system (71) provided by the cloud server (7).

3. The method of claim 1, **characterized in that** the instrument cluster device (5) includes a host display (50), and in step d), the instrument cluster device (5) displays the first navigation screen (500, 506) using the host display (50).

4. The method of claim 3, further **characterized by**: by the host display (50), displaying a notification indicating that the energy level is low when the instrument cluster device (5) determines in step b) that the energy level indicated by the energy level signal is lower than the predetermined energy level.

5. The method of claim 1, the vehicle (1) further including a steering control component (2) to which a vibrator (20) is mounted, the vibrator (20) being electrically coupled to the instrument cluster device (5), said method further **characterized by**: by the instrument cluster device (5), triggering vibration of the vibrator (20) when the instrument cluster device (5) determines in step b) that the energy level indicated by the energy level signal is lower than the predetermined energy level.

6. The method of Claim 1, the vehicle (1) further including an odometer (4) electrically coupled to the instrument cluster device (5), said method further **characterized by**:
e) by the instrument cluster device (5), receiving, from the odometer (4), an odometer signal indicating an accumulated traveling distance of the vehicle (1);
f) by the instrument cluster device (5), determining whether the accumulated traveling distance indicated by the odometer signal is greater than a preset distance for next maintenance; and
g) by the instrument cluster device (5) upon determining in step f) that the accumulated traveling distance indicated by the odometer signal is greater than the preset distance for next maintenance, triggering the portable device (6) to compute data for a second navigation screen (503) that indicates a vehicle maintenance station in a vicinity of the portable device (6), and to transmit the data for the second navigation screen (503) to the instrument cluster device (5); and
h) by the instrument cluster device (5), displaying the second navigation screen (503) based on the data for the second navigation screen (503).

7. The method of Claim 6, **characterized in that** the instrument cluster device (5) includes a host display (50), and in step h), the instrument cluster device (5) displays the second navigation screen (503) using the host display (50).

8. The method of Claim 1, **characterized in that** the energy resource that is used to power the vehicle (1) is selected from a group consisting of one of gasoline, diesel and electricity;
wherein, when the energy resource is one of gasoline and diesel, the energy storage (30, 32) is a fuel tank (30) of the vehicle (1), the energy level sensor (31, 33) is a fuel level sensor (31) configured to detect a fuel level of fuel in the fuel tank (30), and the energy resource supplement facility is a gas station; and
wherein, when the energy resource is electricity, the energy storage (30, 32) is a rechargeable battery (32) of the vehicle (1), the energy level sensor (31, 33) is an electrical energy detector (33) configured to detect residual electrical energy in the rechargeable battery (32), and the energy resource supplement facility is a charging station.

9. A system for assisting a driver of a vehicle (1) in finding a facility providing a service required by the vehicle (1), the vehicle (1) including an energy storage (30, 32) configured to store energy resource that is used to power the vehicle (1), said system **characterized by**:
an energy level sensor (31, 33) configured to detect an energy level relating to remaining energy resource in the energy storage (30, 32), and to output an energy level signal indicating the energy level detected thereby; and
an instrument cluster device (5) that is electrically coupled to said energy level sensor (31, 33) for receiving the energy level therefrom, that is communicatively coupled to a portable device (6) having a computation ability and a navigation function, that includes a host display (50), and that is configured to :
determine whether the energy level indicated by the energy level signal is lower than a predetermined energy level,
upon determining that the energy level indicated by the energy level signal is lower than the predetermined energy level, trigger the portable device (6) to compute data for a first navigation screen (500, 506) that indicates an energy resource supplement facility in a vicinity of the portable device (6), and to transmit the data for the first navigation screen (500, 506) to said instrument cluster device (5), and
display, using said host display (50), the first navigation screen (500, 506) based on the data for the first navigation screen (500, 506).

10. The system of Claim 9, further **characterized by** said portable device (6), wherein said portable device (6) is communicatively coupled to a cloud server (7) that includes a map-and-information system (71), and is configured to compute the data for the first navigation screen (500, 506) based on the map-and-information system (71).

11. The system of Claim 9, further **characterized by**:
an odometer (4) electrically coupled to said instrument cluster device (5), and configured to measure a traveling distance of the vehicle (1), and to output, to said instrument cluster device (5), an odometer signal indicating an accumulated traveling distance measured thereby,
wherein said instrument cluster device (5) is further configured to
determine whether the accumulated traveling distance indicated by the odometer signal is greater than a preset distance for next maintenance,
upon determining that the accumulated traveling distance indicated by the odometer signal is greater than the preset distance for next maintenance, trigger the portable device (6) to compute data for a second navigation screen (503) that indicates a vehicle maintenance station in a vicinity of the portable device (6), and to transmit the data for the second navigation screen (503) to said instrument cluster device (5), and
display, using said host display (50), the second navigation screen (503) based on the data for the second navigation screen (503).

12. The system of Claim 9, further **characterized by**:
a vibrator (20) mounted to a steering control component (2) of the vehicle (1), wherein said instrument cluster device (5) is further configured to trigger vibration of said vibrator (20) when determining that the energy level indicated by the energy level signal is lower than the predetermined energy level.

13. The system of Claim 9, **characterized in that** said instrument cluster device (5) is further configured to display, using said host display (50), a notification indicating that the energy level is low when determining that the energy level indicated by the energy level signal is lower than the predetermined energy level.

14. The system of Claim 9, **characterized in that** the energy resource that is used to power the vehicle (1) is selected from a group consisting of one of gasoline, diesel and electricity;
wherein, when the energy resource is one of gasoline and diesel, the energy storage (30, 32) is a fuel tank (30) of the vehicle (1), said energy level sensor (31, 33) is a fuel level sensor (31) configured to detect a fuel level of fuel in the fuel tank (30), and the energy resource supplement facility is a gas station; and
wherein, when the energy resource is electricity, the energy storage (30, 32) is a rechargeable battery (32) of the vehicle (1), said energy level sensor (31, 33) is an electrical energy detector (33) configured to detect residual electrical energy in the rechargeable battery (32), and the energy resource supplement facility is a charging station.
